Europäisches Patentamt

(19) European Patent Office

Office européen des brevets

(11) Publication number: **0 168 074**
**B1**

(12) **EUROPEAN PATENT SPECIFICATION**

(45) Date of publication of patent specification: **07.01.88**

(51) Int. Cl.⁴: **F 16 K 1/30**

(21) Application number: **85200852.3**

(22) Date of filing: **28.05.85**

(54) Two-valved nipple for drawing-off liquefied gas from a reservoir.

(30) Priority: **21.06.84 FR 8409763**

(43) Date of publication of application:
**15.01.86 Bulletin 86/03**

(45) Publication of the grant of the patent:
**07.01.88 Bulletin 88/01**

(84) Designated Contracting States:
**DE GB IT LU**

(56) References cited:
**EP-A-0 098 914**
**FR-A-1 327 130**
**FR-A-1 387 267**
**FR-A-2 513 727**

(73) Proprietor: **SHELL INTERNATIONALE
RESEARCH MAATSCHAPPIJ B.V.
Carel van Bylandtlaan 30
NL-2596 HR Den Haag (NL)**

(72) Inventor: **Beaudouin, Jean-Claude Joseph
Julien
4, Rue A. Marie La Londe
F-76500 Elbeuf (FR)**
Inventor: **Vignon, Marc
135, Boulevard Jean-Jaurès
F-76000 Rouen (FR)**

(74) Representative: **Aalbers, Onno et al
P.O. Box 302
NL-2501 CH The Hague (NL)**

Courier Press, Leamington Spa, England.

EP 0 168 074 B1

## Description

The present invention relates to a two-valved nipple for drawing-off liquefied gas from a reservoir.

Nipples of this type, also known by the name "liquid draw-off valve", are depending on the model of tank to which they are to be fitted, to be located either in the lower or upper part of the tank.

Such a two-valved nipple is disclosed in FR—A—2 513 727.

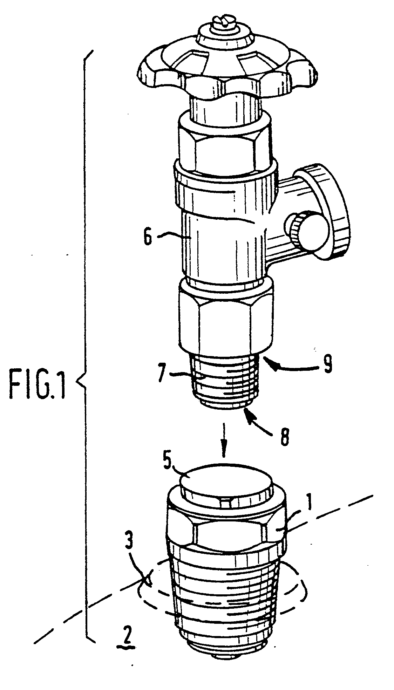

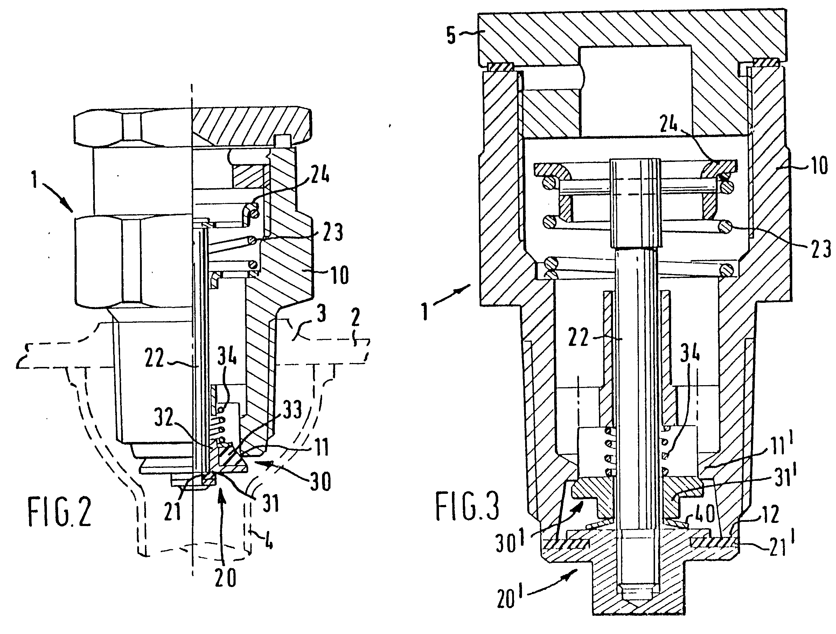

Figures 1 and 2 show one of those prior art nipples which have been universally used for a very large number of years.

In these figures, and likewise in the further description, the case is considered where the nipple 1 is arranged in the upper part of the tank 2. In this case, it is screwed on to a boss 3 fitted with a plunger tube 4 which allows removal of the fluid in the liquid phase at the bottom of the tank. This arrangement, however, is not limitative, and the description is equally valid for a nipple situated in the lower part of the tank.

More precisely, the nipple 1, shown partly in cross section in figure 2, comprises a housing 10 provided at the lower part with a first valve 20, or "sealing valve", and a second valve 30, of "flow limiter". The sealing valve 20 comprises an elastomer washer 21 held at the end of an axial control rod 22 itself pushed by a return spring 23 acting on a support 24 in order to keep the sealing valve in closed position, the washer 21 resting against a seat 31 of a sleeve 32, which forms part of the flow limiter 30 and slides on the axial rod 22.

The flow limiter 30 comprises an elastomer washer 33 which is integral with the sliding sleeve 32 and rests against a seat 11 of the housing 10. A calibrated spring 34 urges the flow limiter in open position. The force which it exerts is much lower than that of the return spring 23, so that, in the absence of any external thrust exerted on the axial rod, both the washers 21 and 33 remain pressed against their seat, which position corresponds with complete closure of the nipple.

The liquid draw-off operation is performed by means of a special offtake valve 6 (Figure 1) provided with a threaded stub 7 comprising a flat annular bearing surface 8 and a joint 9.

After withdrawal of the plug 5, entrance of the stub 7 displaces the support 24 and the rod 22 with it and causes the sealing valve 20 to open. The pressurized gas then escapes along the tolerance which exists between the rod 22 and the sleeve 32 of the flow limiter. After the threaded stub 7 has been completely screwed in, the joint 9 assures tightness between the offtake valve 6 and the housing 10. The pressure then becoming balanced on each side of the flow limiter 30, the latter, which was held closed by the pressure difference, is thereupon opened by the action of the spring 34.

The drawing-off of liquid can now take place at a flow rate that nevertheless does not exceed a given value at which the flow limiter 30 is reclosed by the action of the flow.

This automatic closure is an indispensable safeguard in case of fracture should take place in the liquid draw-off line located downstream from the nipple.

Nipples of this type, however, tend to display three drawbacks:

— typically a leakage of liquid occurs during the operations of screwing and unscrewing of the stub 7 of the offtake valve 6, that is to say during the period when the joint 9 does not yet assure or no longer assures the tightness of the fluid system.

— it can happen that the liquid draw-off operation is prevented because the flow limiter 30 fails to open; in fact, especially after a long period of disuse, the adhesion of the elastomer washer 33 against the seat 11 can be such that the sole pressure of the calibrated spring 34 (of which the force is adjusted to ensure the flow-limiting function but not to overcome any considerable adhesion of the washer 33 to the seat 11) is insufficient to detach the valve from its seat.

— at the end of the liquid draw-off operation, it is impossible to unscrew the stub 7 before having deliberately caused the closure of the flow limiter 30. In fact, the return to the closed positioned of the set of two valves cannot be verified during unscrewing, and there is a risk that they may remain stuck in open position. As a safeguard, the procedure therefore required that, before unscrewing the stub 7, the draw-off line downstream from the offtake valve 6 should be disengaged and then opened to the atmosphere: normally, the flow limiter 30 closes instantly due to the pressure difference which occurs, and it is then possible, while leaving the offtake valve open, to unscrew the stub 7 completely. There remains only one possibility that the valve 20 will fail to close, and this entails little danger, because the leakage along the tolerance between the rod 22 and the sleeve 32 is small and does not prevent the replacement of the plug 5.

It has been proposed to replace the offtake valve 6 and its stub 7 by a novel device which eliminates the first and third drawback due to the fact that the tightness of the system is assured before the noval stub engaged the support 24, which enables the stuck flow limiter to be disengaged (thereby eliminating the second drawback).

The invention envisages eliminating the second drawback without resorting to the disengagement accessory described above, by means of a novel nipple design in conformity with the afore-mentioned type (that is to say a two-valved nipple enabling the flow-limiting function to be assured) and, in particular, compatible with existing liquid offtake valves.

To this end, according to the invention the housing comprises a second seat against which the sealing valve rests, the flow limiter being completely contained inside the volume defined by the housing, closed by the sealing valve.

Reference is made to FR—A—1 327 130 and FR—A—1 387 267 disclosing a two-valved nipple for drawing-off gas comprising a hollow housing, a sealing valve slideably arranged in the upper part of the housing, a stop ring arranged in the lower part of the housing, and a flow limiter slideably arranged between the sealing valve and the stop ring, wherein the flow limiter is connected by means of springs to the sealing valve and the stop ring. These publications are not relevant to the present invention because they relate to a different kind of nipple in which the sealing valve is not located in the lower part of the housing, and in which the flow limiter is not contained inside the volume defined by the housing closed by the sealing valve.

Conveniently, the contact between the flow limiter and its seat is a metal-to-metal contact, thereby eliminating all the drawbacks associated with the risks of adhesion which are encountered with the conventional flow limiters. In fact, total gas-tightness of the flow limiter is no longer necessary, inasmuch as the gas-tightness of the nipple is now wholly assured by the sealing valve.

At any rate, a residual flow is necessary in order to allow the pressure at either side of the flow limiter to balance after the sealing valve has opened, as explained above.

Preferably, elastic means are also interposed between the sealing valve and the flow limiter in order to press the flow limiter to its seat, against the pressure of the calibrated spring, when the sealing valve is in the fully closed position.

Further characteristics and advantages of the invention will become evident from reading the detailed description below, which is given with reference to the attached drawings, in which:

— the afore-mentioned figure 1 is a general view showing a prior art nipple mounted in the top of a tank, with the offtake valve allowing the liquid draw-off;

— the likewise afore-mentioned figure 2 shows a partial vertical section of the nipple according to figure 1;

— figure 3 shows a vertical section, corresponding to that of figure 2 of a nipple according to the invention.

In figures 2 and 3, the same reference numerals designate similar elements performing identical functions, for a nipple according to the prior art and for a nipple according to the invention.

In figure 3, it can be seen that the housing 10 now comprises two seats, one 11' against which the flow limiter 30' rests, and the other 12 against which the sealing valve 20' rests.

Similarly, the sealing valve 20' rests directly, by means of a flat joint 21', against the housing 10, and no longer against an integral seat of the flow limiter. It alone therefore assures the gas-tightness of the nipple.

The flow limiter 30', which is now arranged completely inside the housing 10, is held against its seat by means of an elastic washer 40 interposed between the two valves. The force exerted by the said washer can be relatively low (that is to say slightly larger than that exerted by the compressed calibrated spring 34), inasmuch as the flow limiter 30' no longer helps to assure the gas-tightness of the nipple. Similarly, the risk of the flow limiter being stuck in closed position is further reduced by the fact that it only requires a metal-to-metal contact, without an elastomer joint, for which the risks of sticking are practically non-existent.

Finally, it is possible to choose a higher force for the return spring 23 without at the same time increasing the risk of the flow limiter 30' becoming stuck in closed position.

It may be pointed out that the elastic washer 40 is not indispensable, inasmuch as the flow limiter 30' no longer helps to assure the gas-tightness of the nipple. It is therefore only necessary for the flow limiter to be pressed against its seat when the nipple is in closed position.

Nevertheless, this characteristic allows the method of opening the valves according to the prior art to be retained. Progressive balancing of the pressure on either side of the flow limiter which then opens from its minimum flow rate position (the residual flow rate allowing this balancing of the pressure, and which previously resulted from the space between the sleeve 32 and the rod 22 (Figure 2), is now caused by the imperfect metal-to-metal contact between the flow limiter and its seat).

It will be noted that the flow limiter is now made of a single piece of metal instead of the metal-elastomer composite construction of the prior art.

Finally, it should be recalled that the fundamental operating problem of the occasional impossibility of emptying a tank by conventional means is solved by the novel nipple, whilst it retains the safety function which is embodied in a flow limiter integrated inside the nipple itself.

**Claims**

1. A two-valved niple for drawing-off liquefied gas from a reservoir, of the type comprising:

— a housing (10) capable of being connected at its upper part to a liquid offtake valve (6),

— a sealing valve (20') arranged at the lower part of the housing and integral with an axial valve rod (22) arranged inside the housing, the said rod being pushed to a position in which the sealing valve is closed by a return spring (23) and pushed to a position in which the sealing valve is open when the liquid offtake valve is fitted, by a stub (7) integral with this offtake valve,

— a flow limiter (30'), which slides on the valve rod and is held, by the sealing valve in closed position, against a seat (11') in the lower part of the housing, the said flow limiter furthermore being pushed open by a calibrated spring (34) capable of limiting the fluid flow when the sealing valve is in fully open position, characterized in that the housing comprises a second seat (12) against which the sealing valve (20') rests, the flow limiter (30') being completely contained inside the volume defined by the housing (10) closed by the sealing valve (20').

2. A nipple as claimed in claim 1, characterized in that in addition elastic means (40) are interposed between the sealing valve (20') and the flow limiter (30') in such a way as to press the flow limiter to its seat (11'), against the calibrated spring (34), when the sealing valve is in fully closed position.

3. A nipple as claimed in claim 2, characterized in that the contact between the flow limiter (30') and its seat (11') is a metal-to-metal contact.

4. A nipple as claimed in claim 2, characterized in that the elastic means interposed between the sealing valve (20') and the flow limiter (30') comprises an elastic washer (40) surrounding the valve rod.

## Patentansprüche

1. Nippel mit zwei Ventilen zum Abzug von Flüssiggas aus einem Reservoir mit
— einem Gehäuse (10), das mit seinem oberen Teil mit einem Flüssigkeits-Entnahmeventil (6) verbindbar ist,
— einem Ansperrventil (20'), das im unteren Teil des Gehäuses vorgesehen und mit einem innerhalb des Gehäuses angeordneten Ventilstössel (22) einstückig ist, bei dem der Ventilstössel durch eine Rückhohlfeder (23) in eine Stellung gedrängt wird, in der das Absperrventil geschlossen ist, und durch einen mit dem Entnahmeventil einstückigen Ansatz (7) in eine Stellung gedrängt wird, in der das Absperrventil bei angesetzten Flüssigkeits-Entnahmeventil geöffnet ist,
— einem Strömungsbegrenzer (30'), der auf dem Ventilstössel gleitet und durch das Absperrventil in seiner Schließstellung gegen einem Sitz (11') im unteren Teil des Gehäuses gehalten ist, und der ferner durch eine kalibrierte Feder (34), die die Fluidströmung in der vollen Öffnungstellen des Ansperrventils zu begrenzen vermag, zum Öffnen gedrängt wird, dadurch gekennzeichnet, daß das Gehäuse einen zweiten Sitz (12) aufweist, an dem sich das Absperrventil (20') abstützt, und daß sich der Strömungsbegrenzer (30') vollständig innerhalb des vom durch das Absperrventil (20') verschlossenen Gehäuses (10) umgrenzten Raum befindet.

2. Nippel nach Anspruch 1, dadurch gekennzeichnet, daß zusätzlich elastische Mittel (40) zwischen dem Absperrventil (20') und dem Strömungsbegrenzer (30') derart zwischengeordnet sind, daß der Strömungsbegrenzer gegen die kalibrierte Feder gepreßt ist, wenn sich das Absperrventil vollständig in Schließstellung befindet.

3. Nippel nach Anspruch 2, dadurch gekennzeichnet, daß die Anlage zwischen Strömungsbegrenzer (30') und seinem Sitz (11') eine Metallauf-Metall-Anlage ist.

4. Nippel nach Anspurch 2, dadurch gekennzeichnet, daß die elastischen Mittel zwischen dem Absperrventil (20') und dem Strömungsbegrenzer (30') eine den Ventilstössel umschließende elastische Scheibe (40) umfassen.

## Revendications

1. Un raccord à deux valves pour extraire du gaz liquéfié d'un réservoir, du type comprenant:
— un carter (10) pouvant être relié par sa partie supérieure à une valve de décharge de liquide (6),
— une valve d'étanchéité (20) disposés dans la partie supérieure du carter et solidaire d'une tige axiale (22) placée à l'intérieur du carter, ladite tige étant poussée par un ressort de rappel (23) dans une position dans laquelle la valve d'étanchéité est fermée, et étant poussée par un embout (7) solidaire de la valve de décharge jusque dans une position dans laquelle ladite valve d'étanchéité est ouverte quand la valve de décharge de liquide est montée,
— un limiteur d'écoulement (30'), qui coulisse sur la tige de valve et qui est maintenu, par la valve d'étanchéité en position fermée, contre un siège (11') disposé dans la partie inférieure du carter, ledit limiteur d'écoulement étant en outre poussé en condition d'ouverture par un ressort calibré (34) capable de limiter l'écoulement de fluide quand la valve d'étanchéité se trouve dans la position complètement ouverte, caractérisé en ce que le carter comprend un second siège (12) contre lequel repose la valve d'étanchéité (20'), le limiteur d'écoulement (30') étant logé complètement à l'intérieur du volume défini par le carter (10) et obturé par la valve d'étanchéité (20').

2. Un raccord tel que revendiqué dans la revendication 1, caractérisé en ce qu'en addition, des moyens élastiques (40) sont interposés entre la valve d'étanchéité (20') et le limiteur d'écoulement (30') de manière à pousser le limiteur d'écoulement vers son siège (11'), contre le ressort calibré (34), quand la valve d'étanchéité est en position de fermeture complète.

3. Un accord tel que revendiqué dans la revendication 2, caractérisé, en ce que le contact entre le limiteur d'écoulement (30') et son siège (11') est un contact métal-sur-métal.

4. Un raccord tel que revendiqué dans le revendication 2, caractérisé en ce que le moyen élastique interposé entre la valve d'étanchéité (20') et le limiteur d'écoulement (30') comprend une rondelle élastique (40) entourant la tige de valve.

FIG.1

FIG.3

FIG.2